# EUROPÄISCHE PATENTSCHRIFT

(11) **EP 3 026 320 B1**
(45) Veröffentlichungstag und Bekanntmachung des Hinweises auf die Patenterteilung: **20.09.2017**
(21) Anmeldenummer: 15196157.0
(22) Anmeldetag: 25.11.2015
(51) Int. Cl.: E03F 3/06, F16L 55/165, F16L 55/18, F16L 55/34

(54) **VERFAHREN ZUM EINZIEHEN EINES NEUROHRES IN EIN ALTROHR UND ZUR DURCHFÜHRUNG DES VERFAHRENS GEEIGNETE VORRICHTUNG**
METHOD FOR DRAWING A NEW PIPE INTO AN EXISTING PIPE AND DEVICE FOR CARRYING OUT THE METHOD
PROCEDE D'INSERTION D'UN TUBE NEUF DANS UN TUBE ANCIEN ET DISPOSITIF CONÇU POUR L'EXECUTION DU PROCEDE

(30) Priorität: 27.11.2014 DE 102014117442
(43) Veröffentlichungstag der Anmeldung: 01.06.2016
(73) Patentinhaber: Beyert, Joachim, 4728 Hergenrath (BE)
(72) Erfinder: Beyert, Joachim, 4728 Hergenrath (BE)
(74) Vertreter: Naeven, Ralf

(56) Entgegenhaltungen:
- DE-A1- 19 708 001
- DE-A1-102013 007 533
- DE-B3-102010 004 483
- GB-A- 2 167 829
- US-A1- 2012 211 222

## Beschreibung

Die Erfindung betrifft ein Verfahren zum Einziehen eines Neurohres in ein Altrohr sowie eine zur Durchführung des Verfahrens geeignete Vorrichtung gemäß dem Oberbegriff des Anspruchs 4.

Aus der DE 10 2010 004 483 B3 ist ein Verfahren der eingangs genannten Art bekannt, bei dem zwischen einem als selbstgetriebenes Schlaggerät ausgebildeten Vortriebselement und dem Neurohr eine schubfeste Verbindung hergestellt und das Vortriebselement zusammen mit dem Neurohr durch das Altrohr zu einer Zielposition vorgetrieben wird. In der Praxis hat sich das Problem ergeben, dass ein auf dem Schlaggerät aufgesetzter Führungskopf nicht zur Startöffnung zurückgezogen werden kann, was insbesondere dann problematisch ist, wenn ein Neurohr von einer Startöffnung aus zu einem unzugänglichen Zielpunkt eingezogen und der Prozess möglichst grabenlos durchgeführt werden soll .

Aus der DE 198 59 229 C2 ist eine dort als Rohrmolch bezeichnete Vorrichtung der eingangs genannten Art bekannt, welche in der Lage ist, sich in Rohren oder Kanälen zu bewegen. Die Klemmelemente sind durch ballon- oder balgartige, radial expandierbare Spreizelemente realisiert, welche unabhängig voneinander spreizbar und lösbar sind. Die Spreizelemente sowie das Verbindungselement können z. B. hydraulisch oder auch pneumatisch betätigt werden. Es ist der Einsatz des Rohrmolches zu Inspektions- oder Reparaturarbeiten offenbart, nicht hingegen der Einsatz zum Einziehen eines Neurohres.

Aus der DE 10 2008 014 420 B4 ist eine Vorrichtung zum Einbringen von Leitungen oder Werkzeugen in Kanäle oder Rohre offenbart, welche ebenfalls die Oberbegriffe der unabhängigen Vorrichtungsansprüche offenbart. Die Vorrichtung weist zwei gegeneinander verschiebbare Hohlkörper mit jeweils mindestens einem Druckkissen auf. Die Druckkissen können mit einem Fluid unter Druck beaufschlagt und wieder entlastet werden. Durch wechselseitiges Druckbeaufschlagen und Entlasten der Druckkissen und geeignetem Verschieben der Hohlkörper gegeneinander ist ein Schreitwerk gegeben, welches sich durch Kanäle oder Rohre bewegen kann. Es ist offenbart, Werkzeuge oder Instrumente in Schächte, Kanäle, Rohre etc. zu deren Untersuchung oder Reparatur einzubringen. Nicht offenbart ist jedoch das Einziehen eines Neurohres in ein Altrohr.

Ein weiteres Schreitwerk für die Fortbewegung in nicht begehbaren Rohrleitungen offenbart die DE 196 24 275 A1, welches zwei an einem Hubzylinder angelenkte Spreizzylinder aufweist und z. B. zum Einbringen von Werkzeugen oder Überwachungsgeräten eingesetzt werden kann. Auch hier ist das Einziehen eines Neurohres in ein Altrohr nicht offenbart.

Des Weiteren ist aus der DE 28 27 473 C2 ein Rohrmolch bekannt, der zu Kontrollzwecken eingesetzt wird. Dieser Rohrmolch weist zwei stirnseitige Auflager auf, die mit der Innenwand der Rohrleitung nacheinander in Berührung gebracht werden und mittels eines Verschiebungselementes miteinander verbunden sind, dessen Länge nach dem Andrücken eines der Auflager an die Innenwand der Rohrleitung veränderbar ist. Auch hier ist das Einziehen eines Neurohres nicht offenbart.

Ein weiteres Schreitwerk für nicht begehbare Rohrleitungen ist aus der DE 44 09 886 C2 bekannt, welches aus mindestens zwei Absperrbälgen und einem dazwischen angeordneten teleskopierbaren Zylinder besteht. Es ist offenbart, mittels einer Dichtungsmasse, die in einer Mischkammer einer der Packer entstanden ist, die Rohrleitung zu sanieren. Das Einziehen eines Neurohres ist nicht angesprochen.

Es ist nun Aufgabe der Erfindung, ein Verfahren der eingangs genannten Art sowie Vorrichtungen zur Durchführung des Verfahrens zur Verfügung zu stellen, welche eine Alternative zum Stand der Technik darstellen und eine zuverlässige Handhabung sowie ein vereinfachtes Bergen der gesamten Vorrichtung erlauben.

Bei einem Verfahren der eingangs genannten Art wird die Aufgabe mit den Merkmalen des Anspruchs 1 gelöst.

Demnach wird zwischen einem ersten Klemmelement und dem einzuziehenden Neurohr eine klemmende Verbindung hergestellt. Ein zweites Klemmelement wird in Einzugsrichtung vor dem Neurohr mit dem Altrohr klemmend verbunden. Hiernach wird mittels einer zwischen erstem und zweitem Klemmelement wirkenden Drück-/Zieheinrichtung das erste Klemmelement zusammen mit dem Neurohr in Richtung auf das zweite Klemmelement gezogen. Anschließend wird das zweite Klemmelement vom Altrohr gelöst oder zumindest die klemmende Verbindung reduziert und relativ zum ersten Klemmelement in Einzugsrichtung vorgeschoben. Aufgrund der zwischen dem Neurohr und dem Altrohr bestehenden Reibungskraft bleiben das Neurohr und das darin verklemmte erste Klemmelement in ihrer Position, während das zweite Klemmelement relativ zum Altrohr weiter vorgeschoben wird. In der vorgeschobenen Position wird dann erneut eine klemmende Verbindung zwischen dem zweiten Klemmelement und dem Altrohr hergestellt, um anschließend das Neurohr zusammen mit dem ersten Klemmelement nachzuziehen. In dieser Art wird das Neurohr schrittweise in das Altrohr bis zu einer gewünschten Endposition gezogen. In der Endposition kann die klemmende Verbindung sowohl zwischen erstem Klemmelement und Neurohr wie auch zwischen zweitem Klemmelement und Altrohr gelöst oder zumindest reduziert werden. Dies erlaubt das Zurückziehen einer die Klemmelemente und der Drück-/Zieheinrichtung umfassenden Vorrichtung zu einer als Ausgangspunkt dienenden Startöffnung. Auf diese Weise kann das Neurohr grabenlos verlegt werden. Diese Möglichkeit ist insbesondere dann vorteilhaft, wenn das Neurohr von der Startöffnung aus zu einem Zielpunkt eingezogen werden soll, der unzugänglich oder nur mit erheblichem Aufwand zugänglich ist, z.B. regelmäßig bei der Sanierung defekter Hausanschlüsse.

Damit wird erstmals das Einziehen eines Neurohres unter Einsatz eines im Grundsatz bereits seit vielen Jahrzehnten bekannten rohrgängigen Schreitwerkes vorgeschlagen, wobei allerdings die Funktionsweise des Schreitwerkes verändert wird, indem das erste Klemmelement - anders als bei dem aus dem Stand der Technik bekannten Schreitverfahren - nicht wechselweise gelöst und wieder am umgebenden Rohr geklemmt wird, sondern während der Vorwärtsbewegung des Neurohres ständig im Neurohr verklemmt bleibt. Damit sind zusätzliche Mittel für die Verbindung mit dem Neurohr nicht notwendig.

Mitunter ist es gewünscht, dass das Neurohr bis zu einem vorderen Ende des Altrohres eingezogen wird. Um dies für den Fall zu ermöglichen, bei dem das Altrohr in einen erweiterten Raum, z. B. einen Hauptkanal, mündet, welcher beispielsweise unzugänglich ist, kann das erfindungsgemäße Verfahren vorteilhaft so ausgeführt werden, dass das Neurohr bis in einen Endbereich des zu dem erweiterten Raum führenden Altrohres eingezogen wird, eine in Einzugsrichtung vor dem ersten Klemmelement angeordnete Sperreinrichtung in ein vorderes Ende des Altrohres oder in eine Wandung des erweiterten Raumes formschlüssig eingreift und das erste Klemmelement zusammen mit dem Neurohr in Richtung auf die Sperreinrichtung in eine Endposition gezogen wird.

Auf diese Weise kann das Neurohr bei Bedarf gänzlich bis zum offenen Ende des Altrohres gezogen werden.

Die verwendete Vorrichtung kann anschließend durch den Hauptkanal nach Lösen der klemmenden Verbindungen herausgezogen werden. Vorteilhaft ist es jedoch, die Sperreinrichtung vom Ende des Altrohres oder der Wandung des erweiterten Raumes zu lösen, auf einen geeigneten Durchmesser zurückzuführen und anschließend durch das eingezogene Neurohr bis zur Startöffnung zurückzuziehen. Letztere Vorgehensweise ist insbesondere bei unzugänglichen Endpositionen des vorderen Neurohrendes vorteilhaft.

Es kann vorteilhaft sein, die Sperreinrichtung zur Erhöhung der Klemmwirkung der Einzugsvorrichtung einzusetzen, vorzugsweise indem die Sperreinrichtung in die Innenfläche des Altrohres eingreift. Bei Herstellung der klemmenden Verbindung zwischen dem zweitem Klemmelement und dem Altrohr kann beispielsweise die Sperreinrichtung gespreizt werden, bis Teile der Sperreinrichtung die Innenfläche des Altrohres kontaktieren. Die Sperreinrichtung kann hierfür derart konstruiert sein, dass sie mit ihrer Klemmkraft insbesondere einer der Einzugsrichtung entgegengesetzten Bewegung entgegenwirkt. Im Falle von Unebenheiten im Altrohr, z.B. durch Ablagerungen, Schäden oder im Bereich des Überganges zwischen Teilstücken des Altrohres kann die klemmende Sperreinrichtung zudem mittels Formschlusses in die Innenfläche eingreifen. Der Kontakt zwischen Sperreinrichtung und Innenfläche des Altrohres kann flächig oder weitgehend punktuell, z.B. nagelartig, oder auch durch eine Mehrzahl von punktuellen Eingriffselementen, z.B. spikeartig, sein.

Bei einer zur Durchführung des erfindungsgemäßen Verfahrens geeigneten Vorrichtung wird die vorgenannte Aufgabe durch die kennzeichnenden Merkmale des Anspruchs 4 gelöst.

Durch das Profil der Klemmkontaktfläche mit einer Mehrzahl in Umfangsrichtung senkrecht zur Längserstreckung umlaufender Stegelemente wird die Klemmwirkung unterstützt. Dies gilt insbesondere dann, wenn das Altrohr Unebenheiten, wie z.B. Kanten oder einen Versatz, aufweist oder die Klemmung im Bereich des in der Regel eine Nut bildenden Übergangs zwischen zwei Altrohrstücken erfolgt. Die Stegelemente können dann in die Unebenheit bzw. die in den Übergängen zwischen zwei Altrohrstücken gegebene Nut eingreifen und die Klemmwirkung durch Formschluss erhöhen.

Bei einer zum Durchführen des erfindungsgemäßen Verfahrens geeigneten Vorrichtung kann das technische Problem auch durch die kennzeichnenden Merkmale des Anspruchs 5 gelöst werden.

Demnach sind eine in Einzugsrichtung vor dem ersten Klemmelement angeordnete spreizbare Sperreinrichtung und Verkürzungsmittel zum Verkürzen des Abstandes zwischen erstem Klemmelement und der Sperreinrichtung vorgesehen. Die Sperreinrichtung ermöglicht insbesondere die zum erfindungsgemäßen Verfahren dargestellte Verbringung des Neurohres in eine Endposition am Ende des Altrohres. Die Sperreinrichtung kann aber auch zur Erhöhung der Klemmwirkung der Einzugsvorrichtung im Altrohr eingesetzt werden.

Die erfindungsgemäße Vorrichtung kann auch so ausgeführt werden, dass die Verkürzungsmittel durch die Drück-/Zieheinrichtung gebildet sind. Hierfür kann die Sperreinrichtung zwischen den Klemmelementen an der Drück-/Zieheinrichtung angeordnet werden. Die Sperreinrichtung kann vorteilhaft aber auch am zweiten Klemmelement angeordnet sein, um die Länge des Hubweges der Drück-/Zieheinrichtung nicht zu mindern.

Die Drück-/Zieheinrichtung kann zum Teil im ersten Klemmelement angeordnet sein. So kann die Drück-/Zieheinrichtung z.B. einen im ersten Klemmelement angeordneten Hubzylinder, einen im Hubzylinder verfahrbaren Hubkolben und eine sich vom Hubkolben zum zweiten Klemmelement erstreckende Hubstange umfassen. Bei passenden Längen von Hubzylinder und Hubstange können auf diese Weise die Klemmelemente bis zum Kontakt einander angenähert werden.

Die Spreizung der Sperreinrichtung kann z. B. pneumatisch oder hydraulisch erfolgen. Hierfür ist für die Sperreinrichtung eine gesonderte Fluidführung für die pneumatische oder hydraulische Operation erforderlich.

Es kann vorteilhaft sein, die erfindungsgemäße Vorrichtung so auszubilden, dass Übertragungsmittel vorgesehen sind, welche infolge einer Ausdehnung oder Kontraktion des zweiten Klemmelements eine Stellung der Sperreinrichtung beeinflussen.

So kann z.B. die Sperreinrichtung bei vorzugsweise radialer Ausdehnung des zweiten Klemmelements gespreizt werden. Es kann vorteilhaft sein, eine solche Spreizung gegen eine elastische Kraft mindestens eines Rückführelements, z.B. einer Feder, durchzuführen. Durch Verminderung der Ausdehnung des zweiten Klemmelements wird die Spreizung der Sperreinrichtung mittels des mindestens einen Rückführelements, reduziert, so dass diese zusammen mit dem Rest der Vorrichtung durch das Neurohr zurück in die Startöffnung gezogen werden kann.

Umgekehrt ist es aber auch denkbar, dass mindestens ein elastisches Element, z.B. eine Feder, für eine Spreizung der Sperreinrichtung sorgt. Bei Eintritt in den erweiterten Raum, z.B. einen Hauptkanal, würde die Sperreinrichtung aufgrund der fehlenden Begrenzung durch das Altrohr bis zu einer Sperrstellung aufspreizen und so in die Wandung des erweiterten Raumes oder in das vordere Ende des Altrohres, vorzugsweise in seine Stirnfläche, eingreifen können, sobald der Abstand zwischen der Sperreinrichtung und dem ersten Klemmelement wieder verkürzt wird. Nach anschließendem Vorschieben und damit einhergehenden Lösen der Sperreirichtung von der Wandung oder dem Altrohr kann die Sperrstellung der Sperreinrichtung, z.B. durch eine Ausdehnungsbewegung des zweiten Klemmelements, mechanisch gelöst und die Sperreinrichtung der Kraft des mindestens einen elastischen Elements folgend an die Einzugseinrichtung angelegt werden, so dass die Sperreinrichtung einem Zurückziehen durch das Neurohr nicht im Wege ist.

Die Übertragungsmittel können z. B. seilartig sein.

Mindestens eines der Klemmelemente kann hydraulisch oder pneumatisch bedienbare und mit radialer Richtungskomponente verstellbare Klemmarme aufweisen, mit denen flächige, die Klemmkontaktfläche(n) bildende Kontaktelemente gegen die Wandung des umgebenden Rohres gepresst werden.

Die erfindungsgemäße Vorrichtung kann aber auch so ausgebildet sein, dass mindestens eines der Klemmelemente mindestens ein Druckkissen umfasst, welches die Klemmkontaktfläche oder mindestens eine der Klemmkontaktflächen aufweist. Derartige Druckkissen sind grundsätzlich aus dem Stand der Technik bekannt und lassen sich pneumatisch oder hydraulisch in ihrer Ausdehnung verändern.

Um die Gefahr eines Umstülpens oder Ablösen eines der Druckkissen zu verhindern, kann vorgesehen werden, dass das Druckkissen mindestens zwei in Längsrichtung hintereinander angeordnete Druckkammern aufweist.

Alternativ können auch zwei oder mehr unmittelbar in Längsrichtung aneinander grenzende getrennte Druckkissen vorgesehen sein.

Des Weiteren kann es vorteilhaft sein, wenn mindestens eines der Klemmelemente gelenkig mit der Drück-/Zieheinrichtung verbunden ist. Auf diese Weise wird die gesamte Vorrichtung gelenkiger und das Fortschreiten der Vorrichtung bei nicht geradlinigen Verläufen des Altrohres erleichtert.

Die erfindungsgemäße Vorrichtung kann auch so ausgebildet sein, dass mindestens eines der Klemmelemente mindestens zwei gelenkig miteinander verbundene Teilklemmelemente aufweist. Diese Maßnahme erhöht die Gelenkigkeit der gesamten Einzugsvorrichtung und erleichtert das Einziehen des Neurohres in ein ungerades Altrohr.

Des Weiteren kann vorgesehen sein, dass mindestens eines der Klemmelemente eine Bilderfassungseinheit trägt. Vorzugsweise befindet sich die Bilderfassungseinheit am vorderen Ende des zweiten Klemmelements. Auf diese Weise kann erkannt werden, wann das Ende des Altrohres erreicht wird. Die Kenntnis über die Position des Endes des Altrohres relativ zur erfindungsgemäßen Vorrichtung kann genutzt werden, um das Neurohr in eine geeignete Ausgangsposition für den Einsatz der Sperreinrichtung zu bringen.

Es können noch weitere Bilderfassungseinheiten vorgesehen werden, die vorzugsweise in verschiedene Richtungen ausgerichtet sind.

Schließlich kann die erfindungsgemäße Vorrichtung auch so ausgebildet sein, dass an einem in Einzugsrichtung vorderen Ende des ersten Klemmelements ein Gleitwulst angeordnet ist, welcher geeignet ist, eine in Einzugsrichtung vordere Stirnfläche eines am ersten Klemmelement geklemmten Neurohres zumindest teilweise zu überdecken. Das erste Klemmelement wird somit derart in das Neurohr eingeklemmt, dass der Gleitwulst das in Einzugsrichtung vordere Ende des Neurohres überragt, radial vorsteht und so das Gleiten des Neurohres über Unebenheiten oder Nuten erleichtert.

Vorteilhafte Ausführungsformen der erfindungsgemäßen Vorrichtung sind im Folgenden anhand von Figuren dargestellt.

Die Figuren zeigen dabei jeweils schematisch eine Neurohreinzugsvorrichtung mit Neurohr in einem Altrohr, insbesondere zeigt
- Fig. 1:: eine Einzugsvorrichtung mit Druckkissen mit jeweils durchgehender Druckkammer,
- Fig. 2:: eine Einzugsvorrichtung mit Druckkissen mit geteilten Druckkammern,
- Fig. 3:: eine Einzugsvorrichtung mit einem geteilten vorderen gelenkigen Klemmelement,
- Fig. 4:: eine Einzugsvorrichtung mit Sperreinrichtung und
- Fig. 5:: die Einzugsrichtung gemäß Fig. 4 am Übergang zu einem Hauptkanal.

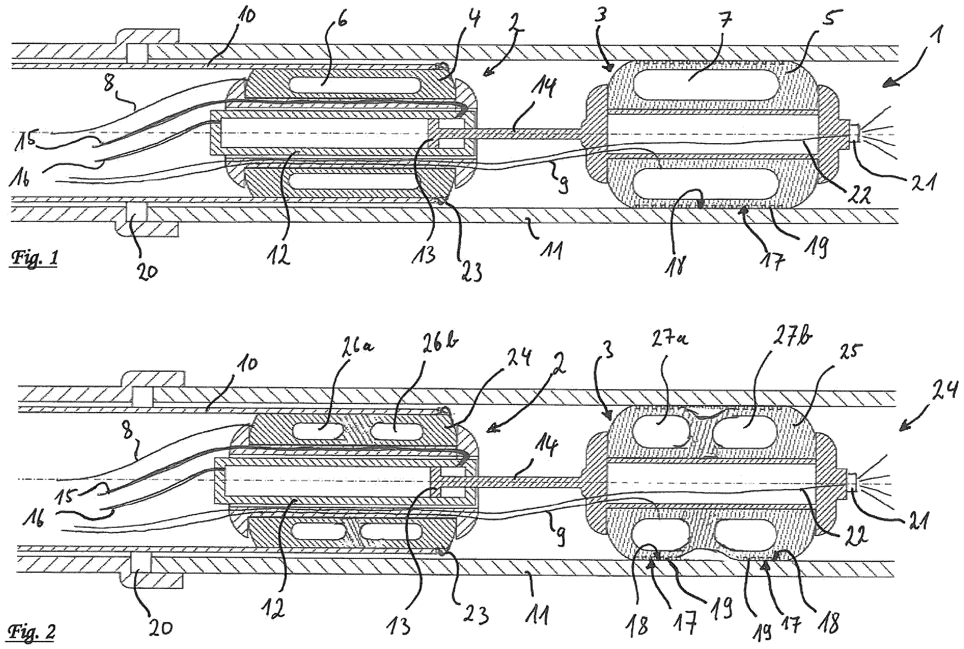

Fig. 1 zeigt eine Einzugsvorrichtung 1 eines ersten Ausführungsbeispiels mit einem hinteren ersten Klemmelement 2 und einem vorderen zweiten Klemmelement 3, die jeweils als Packer ausgebildet sind. Das erste Klemmelement 2 weist ein erstes Druckkissen 4 und das zweite Klemmelement 3 ein zweites Druckkissen 5 auf, die jeweils eine in Längsrichtung durchgehende Druckkammer 6 bzw. 7 aufweisen. Die erste Druckkammer 6 wird über eine erste Druckleitung 8 und die zweite Druckkammer 7 über eine zweite Druckleitung 9 über eine hier nicht dargestellte Drucksteuereinrichtung mit einem Fluid, vorzugsweise einem Gas, versorgt. Mittels des Fluids kann das erste Druckkissen 4 gegen eine Innenseite eines Neurohres 10 gepresst werden. Auf diese Weise wird das erste Klemmelement 2 am in Einzugsrichtung vorderen Ende des Neurohres 10 verklemmt.

Zum Einziehen des Neurohres 10 wird das vordere Ende des Neurohres 10 zusammen mit der Einzugsvorrichtung 1 von einem Zugang aus in ein Altrohr 11 eingeschoben. Dies kann z. B. das Altrohr 11 eines Hausanschlusses sein, wobei das Einschieben des Neurohres 10 bevorzugt von der Hausseite aus erfolgt.

Das erste Druckkissen 4 des ersten Klemmelements 2 umgibt einen Hubzylinder 12, in dem ein Hubkolben 13 geführt ist. Eine Hubstange 14 des Hubkolbens 13 ist am in Einzugsrichtung vorderen Ende dauerhaft am zweiten Klemmelement 3 fixiert. Mittels eines Fluids, vorzugsweise einer Hydraulikflüssigkeit, kann der Hubkolben 13 über Hub-Druckleitungen 15 und 16 im Hubzylinder 12 gesteuert verfahren werden, wodurch sich in entsprechender Weise der Abstand zwischen dem ersten Klemmelement 2 und dem zweiten Klemmelement 2 ändert.

Nach dem endigen Einführen des Neurohres 10 in das Altrohr 11 ist die Hubstange 14 vorzugsweise maximal ausgefahren, so dass auch der Abstand zwischen dem ersten Klemmelement 2 und dem zweiten Klemmelement 3 maximal ist. Anschließend wird das zweite Druckkissen 5 des zweiten Klemmelements 3 aufgepumpt, so dass sich das zweite Druckkissen 5 mit seinem äußeren Umfang 17 gegen die Innenseite des Altrohres 11 klemmt, indem sich eine Klemmkontaktfläche 18 des zweiten Druckkissens 3 am Altrohr 11 anlegt.

Auf der äußeren Umfangsfläche 17 weist das zweite Druckkissen 5 eine Mehrzahl in Umfangsrichtung senkrecht zur Längserstreckung umlaufender Stegelemente 19 auf, die den Griff und damit die Klemmwirkung zwischen dem zweiten Druckkissen 5 und dem Altrohr 11 erhöhen. Diese Stegelemente 19 greifen insbesondere in hier nicht dargestellte Unebenheiten des Altrohres oder in Nuten 20, wie sie am Übergang zwischen zwei Teilstücken des Altrohres 11 entstehen können, ein.

Ist das zweite Klemmelement 3 im Altrohr 11 fest verankert, werden die Druckverhältnisse im Hubzylinder 12 so geändert, dass durch eine geeignete Bewegung des Hubkolbens 13 im Hubzylinder 12 der Abstand zwischen dem zweiten Klemmelement 3 und dem ersten Klemmelement 2 verkürzt wird. Dabei wird auch das am ersten Klemmelement 2 verklemmte Neurohr 10 in das Altrohr 11 mit einer entsprechenden Strecke eingezogen.

Hiernach wird das zweite Druckkissen 5 entspannt, so dass sich das zweite Klemmelement 3 vom Altrohr 11 löst. Anschließend wird der Hubkolben 13 mit der Hubstange 14 ausgefahren, so dass das zweite Klemmelement 3 in Einzugsrichtung im Altrohr 11 vorgeschoben wird. Aufgrund der Reibungskräfte zwischen dem Neurohr 10 und dem Altrohr 11 verbleibt das Neurohr 10 mit dem ersten Klemmelement 2 während dieses Vorgangs in seiner Position. Anschließend wird das zweite Druckkissen 5 des zweiten Klemmelements 3 wieder aufgeblasen und erneut mit dem Altrohr 11 verklemmt, um anschließend das erste Klemmelement 2 zusammen mit dem Neurohr 10 wiederum nachzuziehen.

Auf diese Weise kann das Neurohr 10 bis zu einer Endposition in das Altrohr 11 eingezogen werden. Hat das Neurohr 10 seine Endposition erreicht, werden sowohl das erste Druckkissen 4 am ersten Klemmelement 2 als auch das zweite Druckkissen 5 am zweiten Klemmelement entspannt, so dass sich die Klemmelemente 2 und 3 vom Neurohr 10 bzw. Altrohr 11 lösen. Im entspannten Zustand kann die gesamte Einzugsvorrichtung durch das Neurohr 10 hindurch zurück zum Ausgangspunkt zurückgezogen werden. Mit dieser Vorgehensweise ist die Einzugsvorrichtung insbesondere zur grabenlosen Sanierung von Hausanschlüssen geeignet, da in diesem Fall der Anschlusspunkt an einen Kanal regelmäßig nicht zugänglich ist.

Die Einzugsvorrichtung 1 weist am vorderen zweiten Klemmelement 3 zur Kontrolle der Position ein Kameraelement 21 auf, welches über eine Energiezufuhr- und Signalleitung 22 versorgt wird. Auf diese Weise können die geeignete Endposition oder gegebenenfalls auch ein Hindernis erkannt werden.

Das erste Druckkissen 4 des ersten Klemmelements 2 bildet einen in Umfangsrichtung umlaufenden Gleitwulst 23 aus, der sich über das vordere Ende des Neurohres 10 stülpt. Dieser Gleitwulst 23 kann ein Hängebleiben des Neurohres 10 an kantenartigen Vorsprüngen, z. B. im Bereich der Nut 20, verhindern.

Fig. 2 zeigt eine weitere Einzugsvorrichtung 24, die sich von der in Fig. 1 gezeigten Ausführungsform dadurch unterscheidet, dass Druckkissen 24 und 25 vorgesehen sind, die jeweils zwei Druckkammern 26a und 26b bzw. 27a und 27b aufweisen. Die Druckkammern 26a und 26b des Druckkissens 24 sind durch eine hier nicht dargestellte Übertragungsleitung zum Druckausgleich miteinander verbunden, so dass beide Druckkammern 26a und 26b durch die gemeinsame Druckleitung 8 versorgt werden können. Entsprechendes gilt für die Druckkammern 27a und 27b des Druckkissens 25. Durch diese Ausbildung mit zwei Druckkammern 26a und 26b bzw. 27a und 27b sind die Druckkissen 24 bzw. 25 stabiler gegen ein Abreißen oder Umstülpen während der Zugbelastung. Alle anderen Elemente zur Einzugsvorrichtung 24 entsprechen denen der Einzugsvorrichtung 1 gemäß Fig. 1, so dass auf die diesbezügliche Beschreibung verwiesen wird. Im vorderen Druckkissen 25 ist aufgrund der Existenz zweier Druckkammern 27a und 27b das Druckkissen 25 im Klemmzustand eine Einschnürung vorhanden, wodurch die Klemmkontaktfläche 18 in zwei Teilflächen aufgeteilt wird. Eine derartige Einschnürung kann optional auch am hinteren Druckkissen 24 vorgesehen werden, was in Fig. 2 jedoch nicht dargestellt ist. Die vorteilhafte Wirkung der Einschnürung verbessert sich mit zunehmendem Durchmesser des in Klemmkontakt mit dem jeweiligen Druckkissen 24 oder 25 stehenden Rohres.

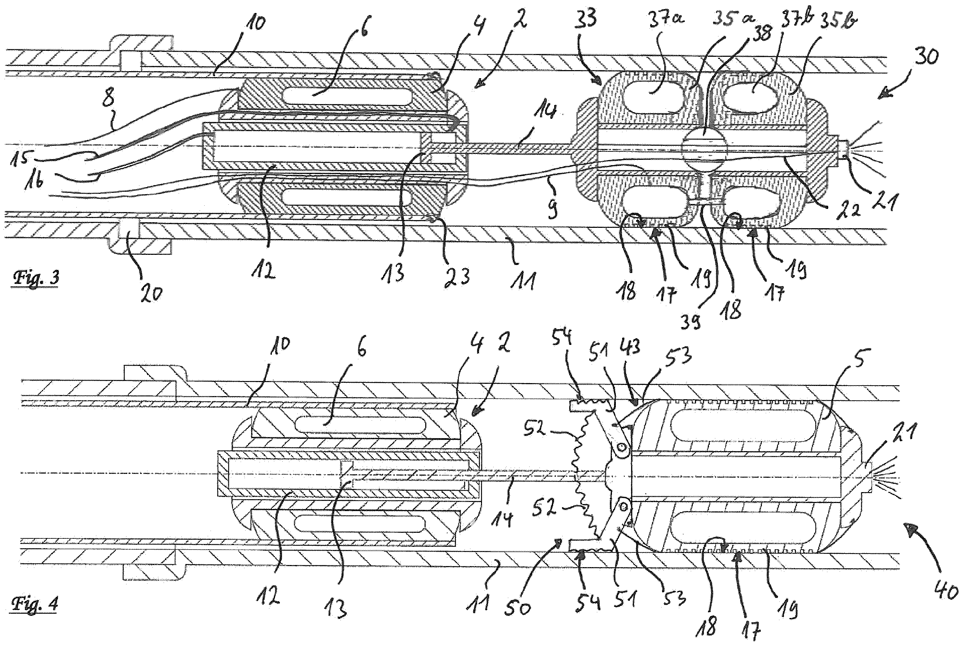

Fig. 3 zeigt eine weitere Ausführungsform der Erfindung mit einer Einzugsvorrichtung 30, die anders als die Ausführungsform gemäß Fig. 1 ein vorderes Klemmelement 33 aufweist, welches zwei über ein Kugelgelenk 38 schwenkbar miteinander verbundene Teilstücke aufweist. Hierdurch kann das vordere Klemmelement 33 leichter durch Krümmungen des Altrohres 11 bewegt werden. Aufgrund der Zweiteilung sind zwei Druckkissen 35a und 35b vorgesehen, welche zur einheitlichen Versorgung mit derselben Druckleitung 9 über ein flexibles Verbindungselement 39 miteinander verbunden sind. Das Verbindungselement 39 ist länger als in der Prinzipskizze nach Fig. 3 dargestellt und kann einer im Bereich des Verbindungselements 39 stattfindenden Abstandvergrößerung folgen.

Ansonsten stimmt die Einzugsvorrichtung 30 gemäß Fig. 3 mit der Einzugsvorrichtung 1 gemäß Fig. 1 überein, weshalb auf die dortige Beschreibung verwiesen wird.

Fig. 4 zeigt eine weitere Ausführungsform einer Einzugsvorrichtung 40, welche ebenfalls in weiten Teilen mit der Ausführungsform gemäß Fig. 1 übereinstimmt, weshalb auf die dortige Beschreibung verwiesen wird. Druckleitungen und Versorgungsleitungen sind in Fig. 4 zur besseren Übersichtlichkeit nicht dargestellt, werden jedoch ähnlich den Ausführungsbeispielen nach Fig. 1 bis 3 benötigt. Im Unterschied zu der Ausführungsform gemäß Fig. 1 umfasst die Einzugsvorrichtung 40 gemäß Fig. 4 am vorderen Klemmelement 43 eine Sperreinrichtung 50, welche zwei Sperrarme 51 aufweist, die wiederum gegen die Hubstange 14 mittels Federn 53 vorgespannt und am vorderen Klemmelement 43 schwenkbar angelenkt sind. Ist das Druckkissen 5 nicht zur Klemmung gegen das Altrohr 11 aufgepumpt, folgen die Sperrarme 51 der Federkraft der Federn 52 in Richtung auf die Hubstange 14. Wird hingegen das Druckkissen 5 zur Klemmung im Altrohr 11 aufgepumpt, werden die Sperrarme 51 gegen die Kraft der Federn 52 mittels Zugseilen 53 nach außen gezogen, so dass an den Sperrarmen 51 vorgesehene Eingriffselemente 54 gegen die Innenfläche des Altrohres 11 gezogen werden und die Klemmwirkung des Klemmelements 43 unterstützen. Das Eingriffselement 54 kann, wie in Fig. 4 dargestellt, flächig und gegenüber dem restlichen Verlauf des Sperrarmes 51 abgewinkelt sein, um eine möglichst große Eingriffsfläche zum Altrohr 11 hin zu erzeugen. Das Eingriffselement 54 kann mit einer gerauten Oberfläche versehen sein, um in Unebenheiten des Altrohres besser eingreifen zu können. Die Eingriffselemente 54 können allerdings alternativ auch spitzen- oder nadelförmig ausgeführt sein.

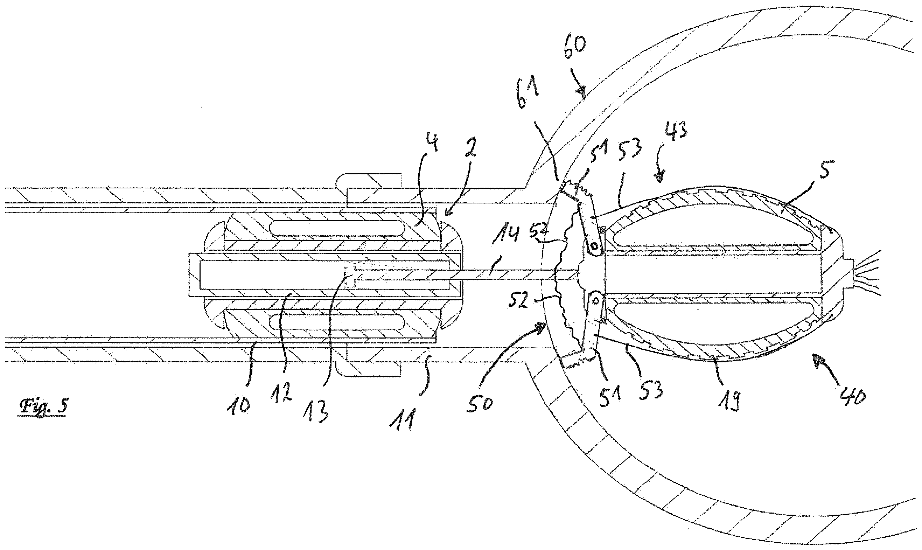

Fig. 5 zeigt die Einzugsvorrichtung 40 in einer gegenüber Fig. 4 weiter fortgeschrittenen Position und macht eine wichtige weitere Funktion der Sperreinrichtung 50 deutlich. Die Einzugsvorrichtung 40 befindet sich nun im Übergangsbereich zwischen dem Altrohr 11 und einem Hauptkanal 60. Vor dem in Fig. 5 gezeigten Moment war das vordere Klemmelement 43 in einer in Fig. 4 gezeigten Weise am unmittelbaren Ende am Altrohr 11 verklemmt und hat das erste Klemmelement 2 zusammen mit dem Neurohr 10 möglichst weit nachgezogen. Anschließend wurde das vordere Klemmelement 43 vom Altrohr 11 gelöst und mittels des Hubkolbens 14 in den Hauptkanal 60 hineingedrückt. Im Hauptkanal 60, der einen erweiterten Raum gegenüber dem Altrohr 11 darstellt, wird das Druckkissen 5 des vorderen Klemmelements 43 so weit aufgepumpt, dass über die Zugseile 53 die Sperrarme 51 der Sperreinrichtung 50 derart weit aufgezogen werden, dass die Sperrarme 51 in die Wandung 61 des Hauptkanals 60 eingreifen können. Somit bilden die Sperrarme 51 an der Wandung 61 Stützpunkte, so dass über die Hubzylinder 12, Hubkolben 13 und Hubstange 14 umfassende Hubeinrichtung das hintere Klemmelement 2 so weit nachgezogen werden kann, dass das Neurohr 10 mit seinem vorderen Ende möglichst bündig zum Übergang der Wandung 61 des Hauptkanals 60 zum Altrohr 11 anliegt.

Anschließend kann das vordere Klemmelement 43 weiter in den Hauptkanal 60 hinein verfahren werden, um hiernach oder währenddessen die Druckkissen 5 und 4 der Klemmelemente 43 und 2 zu entspannen. Hierdurch wird das hintere Klemmelement 2 vom Neurohr gelöst und die Sperrarme 51 werden mittels der Federn 52 in Richtung auf die Hubstange 14 verschwenkt, da die Zugkraft der Zugseile 53 nicht mehr auf die Sperrarme 51 wirkt. Anschließend können beide Klemmelemente 2 und 43 durch das Neurohr 10 hindurch zum Ausgangspunkt der Operation gezogen werden.

**Bezugszeichenliste**

| | | | |
|---|---|---|---|
| 1 | Einzugsvorrichtung | 38 | Kugelgelenk |
| 2 | erstes Klemmelement | 39 | Verbindungselement |
| 3 | zweites Klemmelement | 40 | Einzugsvorrichtung |
| 4 | erstes Druckkissen | 43 | Klemmelement |
| 5 | zweites Druckkissen | 50 | Sperreinrichtung |
| 6 | erste Druckkammer | 51 | Sperrarm |
| 7 | zweite Druckkammer | 52 | Feder |
| 8 | erste Druckleitung | 53 | Zugseil |
| 9 | zweite Druckleitung | 54 | Eingriffselement |
| 10 | Neurohr | 60 | Hauptkanal |
| 11 | Altrohr | 61 | Wandung |
| 12 | Hubzylinder | | |
| 13 | Hubkolben | | |
| 14 | Hubstange | | |
| 15 | Hub-Druckleitung | | |
| 16 | Hub-Druckleitung | | |
| 17 | äußerer Umfang des zweiten Druckkissens | | |
| 18 | Klemmkontaktfläche | | |
| 19 | Stegelement | | |
| 20 | Nut im Altrohr | | |
| 21 | Kamera | | |
| 22 | Energiezufuhr- und Signalleitung | | |
| 23 | Gleitwulst | | |
| 24 | Druckkissen | | |
| 25 | Druckkissen | | |
| 26 | Druckkammer | | |
| 27 | Druckkammer | | |
| 30 | Einzugsvorrichtung | | |
| 33 | Klemmelement | | |
| 35 | Druckkissen | | |
| 37 | Druckkammer | | |

## Patentansprüche

1. Verfahren zum Einziehen eines Neurohres (10) in ein Altrohr (11), bei dem zwischen einem ersten Klemmelement (2), und dem Neurohr (10) eine klemmende Verbindung hergestellt wird und die folgenden Schritte in mindestens einer Sequenz durchgeführt werden:
a) Herstellen einer klemmenden Verbindung zwischen einem zweiten Klemmelement (3, 33, 43) und dem Altrohr (11) in Einzugsrichtung vor dem Neurohr (10),
b) Ziehen des ersten Klemmelements (2) zusammen mit dem Neurohr (10) in Richtung auf das zweite Klemmelement (3, 33, 43) mittels einer zwischen erstem (2) und zweitem (3, 33, 43) Klemmelement wirkenden Drück-/Zieheinrichtung (12, 13, 14),
c) Reduzieren oder vollständiges Lösen der klemmenden Verbindung zwischen zweitem Klemmelement (3, 33, 43) und Altrohr (11) und
d) Vorschieben des zweiten Klemmelements (3, 33, 43) relativ zum ersten Klemmelement (2) in Einzugsrichtung.

2. Verfahren nach Anspruch 1, **dadurch gekennzeichnet, dass**
das Neurohr (10) bis in einen Endbereich des zu einem erweiterten Raum (60) führenden Altrohres (11) eingezogen wird,
eine in Einzugsrichtung vor dem ersten Klemmelement (2) angeordnete Sperreinrichtung (50) in ein vorderes Ende des Altrohres (11) oder in eine Wandung (61) des erweiterten Raumes eingreift und
das erste Klemmelement (2) zusammen mit dem Neurohr (10) in Richtung auf die Sperreinrichtung (50) in eine Endposition gezogen wird.

3. Verfahren nach Anspruch 2, **dadurch gekennzeichnet, dass** die Sperreinrichtung (50) im Altrohr (11) zur zusätzlichen Verklemmung am Altrohr (11) eingesetzt wird.

4. Zur Durchführung des Verfahrens nach einem der Ansprüche 1 bis 3 geeignete Vorrichtung, umfassend
ein erstes (2) und ein zweites (3, 33, 43) Klemmelement, wobei beide Klemmelemente (2, 3, 33, 43) jeweils mindestens eine zum klemmenden Kontakt mit der Innenfläche eines Neurohres (10) oder eines Altrohres (11) vorgesehene Klemmkontaktfläche (18) aufweisen,
Mittel zur Steuerung der am ersten Klemmelement (2) und am zweiten Klemmelement (3, 33, 43) gegebenen Klemmwirkung, und
eine zwischen erstem (2) und zweitem (3, 33, 43) Klemmelement wirkende und sich in einer Längsrichtung erstreckenden Drück/-Zieheinrichtung (12, 13, 14),
**dadurch gekennzeichnet, dass**
zumindest an einem der Klemmelemente (2, 3, 33, 43) die Klemmkontaktfläche (18) oder mindestens eine der Klemmkontaktflächen (18) ein Profil mit einer Mehrzahl in Umfangsrichtung senkrecht zur Längserstreckung umlaufender Stegelemente (19) aufweist.

5. Zur Durchführung des Verfahrens nach einem der Ansprüche 1 bis 3 geeignete Vorrichtung, umfassend
ein erstes (2) und ein zweites (3, 33, 43) Klemmelement, wobei beide Klemmelemente (2, 3, 33, 43) jeweils mindestens eine zum klemmenden Kontakt mit der Innenfläche eines Neurohres (10) oder eines Altrohres (11) vorgesehene Klemmkontaktfläche (18) aufweisen,
Mittel zur Steuerung der am ersten Klemmelement (2) und am zweiten Klemmelement (3, 33, 43) gegebenen Klemmwirkung, und
eine zwischen erstem (2) und zweitem Klemmelement (3, 33, 43) wirkende und sich in einer Längsrichtung erstreckende Drück/-Zieheinrichtung (12, 13, 14), **gekennzeichnet durch**
eine vor dem ersten Klemmelement (2) angeordnete spreizbare Sperreinrichtung (50) sowie durch Verkürzungsmittel zum Verkürzen des Abstandes zwischen dem ersten Klemmelement (2) und der Sperreinrichtung (50).

6. Vorrichtung nach Anspruch 5, **dadurch gekennzeichnet, dass** die Verkürzungsmittel durch die Drück-/Zieheinrichtung (12, 13, 14) gebildet sind.

7. Vorrichtung nach Anspruch 6, **dadurch gekennzeichnet, dass** die Sperreinrichtung (50) am zweiten Klemmelement (3, 33, 43) oder am zweiten Klemmelement (3, 33, 43) angrenzend an der Drück-/Zieheinrichtung (50) angeordnet ist.

8. Vorrichtung nach einem der Ansprüche 4 bis 7, **gekennzeichnet durch** Übersetzungsmittel (53), welche eine Ausdehnung oder eine Kontraktion des zweiten Klemmelements (3, 33, 43) in eine Bewegung der Sperreinrichtung (50) übersetzen.

9. Vorrichtung nach einem der Ansprüche 4 bis 8, **dadurch gekennzeichnet, dass** mindestens eines der Klemmelemente (2, 3, 33, 43) mindestens ein die Klemmkontaktfläche (18) oder mindestens eine der Klemmkontaktflächen (18) aufweisendes Druckkissen (4, 5, 24, 25, 35) umfasst.

10. Vorrichtung nach Anspruch 9, **dadurch gekennzeichnet, dass** mindestens eines der Druckkissen (4, 5, 24, 25, 35) mindestens zwei in Längsrichtung hintereinander angeordnete Druckkammern (26a, 26b, 27a, 27b) aufweist.

11. Vorrichtung nach einem der Ansprüche 4 bis 10, **dadurch gekennzeichnet, dass** mindestens eines der Klemmelemente (2, 3, 33, 43) mindestens zwei gelenkig miteinander verbundene Teilklemmelemente aufweist.

12. Vorrichtung nach einem der Ansprüche 4 bis 11, **dadurch gekennzeichnet, dass** mindestens eines der Klemmelemente (2, 3, 33, 43) eine Bilderfassungseinheit (21) trägt.

13. Vorrichtung nach einem der Ansprüche 4 bis 12, **dadurch gekennzeichnet, dass** an einem in Einzugsrichtung vorderen Ende des ersten Klemmelements (2) ein Gleitwulst (23) angeordnet ist, welcher geeignet ist, eine in Einzugsrichtung vordere Stirnfläche eines am ersten Klemmelement (2) geklemmten Neurohres (10) zumindest teilweise zu überdecken.

## Claims

1. Method which is intended for drawing a new pipe (10) into an old pipe (11) and in which a clamping connection is established between a first clamping element (2) and the new pipe (10) and the following steps are carried out in at least one sequence:
a) establishing a clamping connection between a second clamping element (3, 33, 43) and the old pipe (11) ahead of the new pipe (10), as seen in the drawing-in direction,
b) drawing the first clamping element (2), together with the new pipe (10), in the direction of the second clamping element (3, 33, 43) by means of a pushing/pulling device (12, 13, 14) which acts between the first (2) and second (3, 33, 43) clamping elements,
c) reducing or fully releasing the clamping connection between the second clamping element (3, 33, 43) and old pipe (11), and
d) advancing the second clamping element (3, 33, 43) relative to the first clamping element (2) in the drawing-in direction.

2. Method according to Claim 1, **characterized in that** the new pipe (10) is drawn in as far as an end region of the old pipe (11), which leads to a widened space (60),
a blocking device (50), which is arranged ahead of the first clamping element (2), as seen in the drawing-in direction, engages in a front end of the old pipe (11) or in a wall (61) of the widened space, and
the first clamping element (2), together with the new pipe (10), is drawn, in the direction of the blocking device (50), into an end position.

3. Method according to Claim 2, **characterized in that** the blocking device (50) is used in the old pipe (11) to provide for additional clamping on the old pipe (11).

4. Apparatus suitable for implementing the method according to one of Claims 1 to 3 and comprising
a first (2) and a second (3, 33, 43) clamping element, wherein the two clamping elements (2, 3, 33, 43) each have at least one clamping contact surface (18) provided for clamping contact with the inner surface of a new pipe (10) or of an old pipe (11),
means for controlling the clamping action provided at the first clamping element (2) and at the second clamping element (3, 33, 43), and
a longitudinally extending pushing/pulling device (12, 13, 14) which acts between the first (2) and second (3, 33, 43) clamping elements,
**characterized in that**
at least on one of the clamping elements (2, 3, 33, 43), the clamping contact surface (18), or at least one of the clamping contact surfaces (18), has a profile with a plurality of web elements (19) encircling in the circumferential direction perpendicularly to the longitudinal extent.

5. Apparatus suitable for implementing the method according to one of Claims 1 to 3 and comprising
a first (2) and a second (3, 33, 43) clamping element, wherein the two clamping elements (2, 3, 33, 43) each have at least one clamping contact surface (18) provided for clamping contact with the inner surface of a new pipe (10) or of an old pipe (11),
means for controlling the clamping action provided at the first clamping element (2) and at the second clamping element (3, 33, 43), and
a longitudinally extending pushing/pulling device (12, 13, 14) which acts between the first (2) and second (3, 33, 43) clamping elements,
**characterized**
**by** a spreadable blocking device (50), which is arranged ahead of the first clamping element (2), and by shortening means for shortening the distance between the first clamping element (2) and the blocking device (50) .

6. Apparatus according to Claim 5, **characterized in that** the shortening means are formed by the pushing/pulling device (12, 13, 14).

7. Apparatus according to Claim 6, **characterized in that** the blocking device (50) is arranged on the second clamping element (3, 33, 43) or on the pushing/pulling device (50), adjacent to the second clamping element (3, 33, 43).

8. Apparatus according to one of Claims 4 to 7, **characterized by** conversion means (53), which convert an expansion or a contraction of the second clamping element (3, 33, 43) into a movement of the blocking device (50).

9. Apparatus according to one of Claims 4 to 8, **characterized in that** at least one of the clamping elements (2, 3, 33, 43) comprises at least one pressure pad (4, 5, 24, 25, 35) having the clamping contact surface (18) or at least one of the clamping contact surfaces (18).

10. Apparatus according to Claim 9, **characterized in that** at least one of the pressure pads (4, 5, 24, 25, 35) has at least two pressure chambers (26a, 26b, 27a, 27b) arranged one behind the other in the longitudinal direction.

11. Apparatus according to one of Claims 4 to 10, **characterized in that** at least one of the clamping elements (2, 3, 33, 43) has at least two clamping subelements connected to one another in an articulated manner.

12. Apparatus according to one of Claims 4 to 11, **characterized in that** at least one of the clamping elements (2, 3, 33, 43) carries an image-capturing unit (21) .

13. Apparatus according to one of Claims 4 to 12, **characterized in that** a sliding bead (23) is arranged at a front end of the first clamping element (2), as seen in the drawing-in direction, and said bead is suitable for covering over, at least in part, a front end surface, as seen in the drawing-in direction, of the new pipe (10) clamped on the first clamping element (2) .

## Revendications

1. Procédé pour insérer un tube neuf (10) dans un tube ancien (11), dans lequel on établit une liaison serrée entre un premier élément de serrage (2) et le tube neuf (10) et on exécute les étapes suivantes en au moins une séquence:
a) établir une liaison serrée entre un deuxième élément de serrage (3, 33, 43) et le tube ancien (11) avant le tube neuf (10) dans la direction d'insertion,
b) tirer le premier élément de serrage (2) conjointement au tube neuf (10) en direction du deuxième élément de serrage (3, 33, 43) au moyen d'un dispositif de poussée/traction (12, 13, 14) opérant entre le premier (2) et le deuxième (3, 33, 43) éléments de serrage,
c) réduire ou relâcher complètement la liaison serrée entre le deuxième élément de serrage (3, 33, 43) et le tube ancien (11), et
d) faire avancer le deuxième élément de serrage (3, 33, 43) par rapport au premier élément de serrage (2) dans la direction d'insertion.

2. Procédé selon la revendication 1, **caractérisé en ce que** l'on insère le tube neuf (10) jusque dans une région d'extrémité du tube ancien (11) conduisant à une chambre élargie (60), un dispositif de blocage (50) disposé avant le premier élément de serrage (2) dans la direction d'insertion s'engage dans une extrémité avant du tube ancien (11) ou dans une paroi (61) de la chambre élargie, et on tire le premier élément de serrage (2) conjointement au tube neuf (10) en direction du dispositif de blocage (50) dans une position finale.

3. Procédé selon la revendication 2, **caractérisé en ce que** l'on utilise le dispositif de blocage (50) dans le tube ancien (11) pour le serrage supplémentaire sur le tube ancien (11).

4. Dispositif approprié pour la mise en oeuvre du procédé selon l'une quelconque des revendications 1 à 3, comprenant
un premier (2) et un deuxième (3, 33, 43) éléments de serrage, dans lequel les deux éléments de serrage (2, 3, 33, 43) présentent respectivement au moins une face de contact de serrage (18) prévue pour le contact de serrage avec la face intérieure d'un tube neuf (10) ou d'un tube ancien (11),
des moyens pour la commande de l'effet de serrage présent au premier élément de serrage (2) et au deuxième élément de serrage (3, 33, 43), et
un dispositif de poussée/traction (12, 13, 14) opérant entre le premier (2) et le deuxième (3, 33, 43) éléments de serrage et s'étendant dans une direction longitudinale,
**caractérisé en ce qu'**au moins sur un des éléments de serrage (2, 3, 33, 43), la face de contact de serrage (18) ou au moins une des faces de contact de serrage (18) présente un profil avec une multiplicité d'éléments de nervure (19) courant dans la direction périphérique perpendiculairement à l'extension longitudinale.

5. Dispositif approprié pour la mise en oeuvre du procédé selon l'une quelconque des revendications 1 à 3, comprenant
un premier (2) et un deuxième (3, 33, 43) éléments de serrage, dans lequel les deux éléments de serrage (2, 3, 33, 43) présentent respectivement au moins une face de contact de serrage (18) prévue pour le contact de serrage avec la face intérieure d'un tube neuf (10) ou d'un tube ancien (11),
des moyens pour la commande de l'effet de serrage présent au premier élément de serrage (2) et au deuxième élément de serrage (3, 33, 43), et
un dispositif de poussée/traction (12, 13, 14) opérant entre le premier (2) et le deuxième (3, 33, 43) éléments de serrage et s'étendant dans une direction longitudinale,
**caractérisé par** un dispositif de blocage expansible (50) disposé avant le premier élément de serrage (2) ainsi que par des moyens de raccourcissement destinés à raccourcir la distance entre le premier élément de serrage (2) et le dispositif de blocage (50).

6. Dispositif selon la revendication 5, **caractérisé en ce que** les moyens de raccourcissement sont formés par le dispositif de poussée/traction (12, 13, 14).

7. Dispositif selon la revendication 6, **caractérisé en ce que** le dispositif de blocage (50) est disposé sur le deuxième élément de serrage (3, 33, 43) ou sur le dispositif de poussée/traction (50) à proximité du deuxième élément de serrage (3, 33, 43).

8. Dispositif selon l'une quelconque des revendications 4 à 7, **caractérisé par** des moyens de conversion (53), qui transforment un allongement ou une contraction du deuxième élément de serrage (3, 33, 43) en un mouvement du dispositif de blocage (50).

9. Dispositif selon l'une quelconque des revendications 4 à 8, **caractérisé en ce qu'**au moins un des éléments de serrage (2, 3, 33, 43) comprend au moins un coussin de pression (4, 5, 24, 25, 35) présentant la face de contact de serrage (18) ou au moins une des faces de contact de serrage (18).

10. Dispositif selon la revendication 9, **caractérisé en ce qu'**au moins un des coussins de pression (4, 5, 24, 25, 35) présente au moins deux chambres de pression (26a, 26b, 27a, 27b) disposées l'une derrière l'autre en direction longitudinale.

11. Dispositif selon l'une quelconque des revendications 4 à 10, **caractérisé en ce qu'**au moins un des éléments de serrage (2, 3, 33, 43) présente au moins deux éléments de serrage partiels reliés l'un à l'autre de façon articulée.

12. Dispositif selon l'une quelconque des revendications 4 à 11, **caractérisé en ce qu'**au moins un des éléments de serrage (2, 3, 33, 43) porte une unité de détection d'image (21).

13. Dispositif selon l'une quelconque des revendications 4 à 12, **caractérisé en ce qu'**à une extrémité avant dans la direction d'insertion du premier élément de serrage (2) est disposé un bourrelet de glissement (23), qui convient pour recouvrir au moins en partie une face frontale avant dans la direction d'insertion d'un tube neuf (10) serré sur le premier élément de serrage (2).
